Europäisches Patentamt

(19) European Patent Office

Office européen des brevets

(11) Publication number: **0 028 890**
**A1**

(12) **EUROPEAN PATENT APPLICATION**

(21) Application number: **80303744.9**

(22) Date of filing: **22.10.80**

(51) Int. Cl.³: **H 02 M 1/08**
**H 02 P 13/16**

(30) Priority: **05.11.79 US 91020**

(43) Date of publication of application:
**20.05.81 Bulletin 81/20**

(84) Designated Contracting States:
**BE FR IT**

(71) Applicant: **WESTINGHOUSE ELECTRIC CORPORATION**
**Westinghouse Building Gateway Center**
**Pittsburgh Pennsylvania 15222(US)**

(72) Inventor: **Detering, Richard Larry**
**6535 NE 188th Street**
**Seattle, Washington 98155(US)**

(74) Representative: **van Berlyn, Ronald Gilbert**
**23, Centre Heights**
**London, NW3 6JG(GB)**

(54) Improved digital gate pulse generator for static power converters.

(57) In a static-controlled power converter which uses power switches (SCRs) ($T_1$-$T_6$) controlled by a digital pulse generator, the cosine transfer gain is linearized by digital treatment of one of the two control signals of the digital pulse generator controlling the firing angle of the power switches ($T_1$-$T_6$). To this effect, a ROM device (200) is designed so as to convert the inputted digital control signal into a digital input signal for the digital pulse generator which is an exact compensation function, e.g. providing a transfer gain combining with the cosine transfer gain of the converter to linearize the overall power amplifier.

./...

FIG. 4

1

IMPROVED DIGITAL GATE PULSE GENERATOR
FOR STATIC POWER CONVERTERS

This invention relates to static-controlled power converters in general, and more particularly to such converters having SCR power devices controlled by a digital gate pulse generator.

Digital gate pulse generators generally generate and use a time wave to which a reference signal can be automatically related for establishing a firing angle, and they provide multiplexing of the various SCR devices which have to be cyclically and successively fired. An example of such a digital gate pulse generator is described in U.S. Patent No. 4,028,609 of R. L. Detering, in which the transfer gain is linear.

It is well known that the output voltage of a power converter including a plurality of thyristors may be controlled by controlling the phase of the firing pulses applied to the thyristors. However, the relationship between the firing angle and the output voltage of the converter is non-linear, more precisely the output voltage is a function of the cosine of the firing angle. Where generation and control of the firing pulses for the individual thyristors is performed by a gate pulse generator (GPG), like with the aforementioned Detering patent, the overall system combining the GPG and the thyristor power converter may be thought of as a power amplifier the transfer gain of which combines the individual transfer gains of the GPG and of the power converter. It follows that, if the individual transfer gain of the GPG can be independently determined, it will be possible to compensate for the cosine transfer gain inherent in the power converter. The idea has been already conceived and the well-known cosine wave crossing method has been applied to the operation of a GPG so as to obtain an overall linear transfer gain. Thus, the use of cosine wave crossing has been thought of "as the most natural one for the cycloconverter inasmuch as it has the unique property that it produces the minimum possible total distortion of the output voltage wave form" (see B. R. Pelly "Thyristor Phase-Controlled Converters and Cycloconverters" John Wiley 1971 Chapter 9 pp. 229-247). It is also stated in the B. R. Pelly book that the "cosine wave crossing" method offers the indisputable advantage of a linear transfer gain for the overall power amplifier and no distortion, thus an optimum output voltage wave form in terms of harmonics. Nevertheless the cosine wave crossing method has a number of serious disadvantages.

First, in practice the operation of the GPG is limited to firing angles within a range of 180 electrical degrees, or less, thereby limiting the utilization of the power converter which will never attain 100%. Secondly, due to the monotonicity of the cosine timing wave existing only on a 180 degree interval, control beyond this range is not obtainable. Also, since end-stops must be provided in order to establish control limits at either ends of the operating range, the cosine timing wave is a poor choice because of the small slope at the limit of the 180 degree interval. Another drawback is due to the fact that cosine crossing uses a signal derived from the power source. Therefore, the time wave is affected by electrical noise and this might lead to a faulty operation of the control system. If filtering is used in order to reduce the effect of noise, the system will depend upon a rigid operating frequency. Finally, since with a plurality of thyristors the firing pulses must be equally spaced in order to minimize harmonics, accurate spacing is essential. Unfortunately, with a cosine wave the accuracy is usually no better than 2 or 3 electrical degrees.

The invention stems from the observation that by digital treatment, a proper choice of the transfer gain attributable to the GPG can readily be achieved which will make it possible to produce any desirable total transfer gain of the power amplifier, such as linear or non-linear. This is a superior alternative for the cosine crossing method since it eliminates all the aforementioned drawbacks.

The invention also signifies simplicity and low cost in achieving the intended purpose.

The invention resides in providing a digital transformation at the comparator stage of the GPG of a thyristor-controlled power system so as to introduce a predetermined transfer gain between one of the time wave reference signal and the firing angle reference signal and the gate pulse generator itself. Preferably, such predetermined transfer gain is chosen by synthesizing digitally the inverse cosine transfer gain over the normal operating range, while reverting to a linear gain over the remaining control range of the GPG. As a result, all the advantages of the aforementioned cosine intersect method may be kept while deriving all the advantages of a digital gating pulse generator system, such as the one shown in the above-identified Detering patent. This is accomplished at a minimal cost by merely adding one component in the form of a Read-Only Memory (ROM) device.

Figures 1A, 1B show the transfer gains involved in a thyristor-controlled power converter system of the prior art.

Figs. 2A, 2B and 3A, 3B illustrate the transfer gains in two alternative embodiments of the present invention leading to linear transfer gain for a thyristor-controlled power converter system.

Fig. 4 schematically shows a preferred embodiment of the invention.

Fig. 5 illustrates with curves the firing cycles of the thyristor arrangement of Fig. 4.

Fig. 6 typically shows with address inputs and address outputs a read-only memory block such as used in Fig. 4.

Fig. 7 shows the embodiment of the invention with a digital reference control signal.

Fig. 8 is a schematic representation of another embodiment of the invention.

Fig. 9 illustrates with curves the transfer gain obtained with the embodiment of Fig. 8.

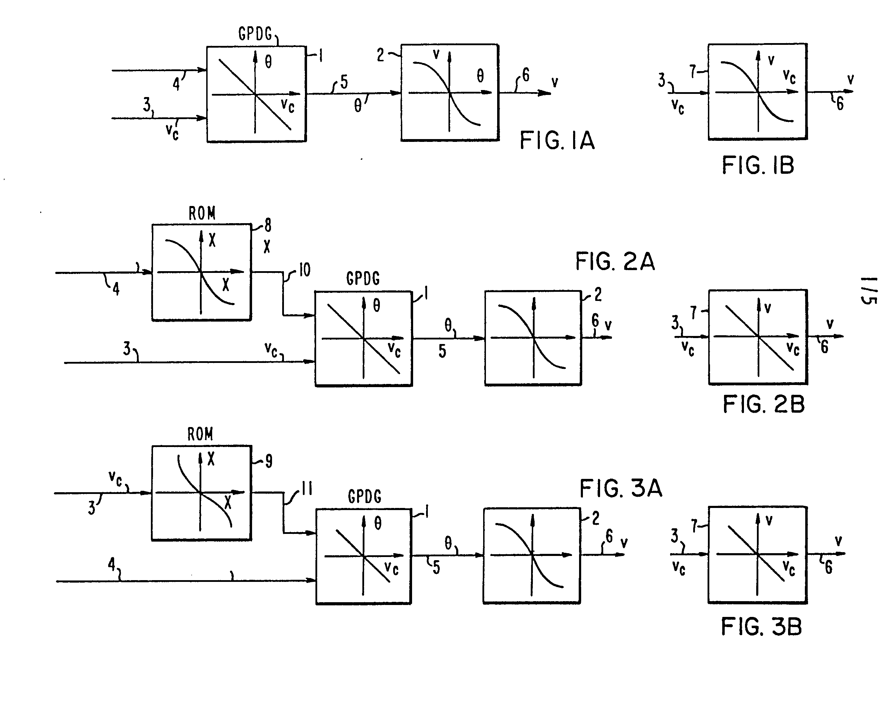

Fig. 1A shows the transfer gain of a phase-controlled power converter outputting a direct current voltage $v$ from an array of thyristors fired at a firing angle $\theta$ in response to a reference voltage $v_c$ applied to a gate pulse generator (GPG) controlling the phase of the thyristor. As well known, for instance from U.S. Patent No. 4,028,609 of R. L. Detering (for the purpose of the description of the preferred embodiment of the invention, the Detering patent is hereby incorporated by reference), a gate pulse generator (GPG) commonly includes a comparator which is responsive to a time reference signal and a reference voltage which intersect at an instant corresponding to the firing angle $\theta$, e.g. in time relation to a definite voltage on the alternating current phase line applied between the opposite electrodes of the thyristor to be fired next.

As it appears from Fig. 1A, the transfer gain of the overall system combines the transfer gain 1 of the gate pulse generator and the transfer gain 2 of the power converter proper. Like in the Detering patent, which employs a digital ramp as the time reference to be compared with a reference voltage $v_c$, the transfer gain of block 1 is linear, when on line 4 the time reference combines with the firing angle reference $v_c$ of line 3 to generate through a multivibrator in the system a firing pulse at a firing angle θ. As explained earlier, the power converter has a transfer gain which is a cosine function of the firing angle θ when generating the output voltage v on line 6. Fig. 1B shows at 7 the transfer gain equivalent to blocks 1 and 2 of Fig. 1A. The overall transfer gain is a cosine function of the reference voltage $v_c$.

Figs. 2A, 2B and 3A, 3B illustrates the inventive concept of introducing a transfer function between one of the parameters which control the gate pulse generator, e.g., the comparator, namely the time reference of line 4 and the reference voltage $v_c$ of line 3. Fig. 2A shows a block 8 schematizing a cosine function of the time reference before it is applied by 10 to the gate pulse generator, e.g., the comparator.

Fig. 3A shows a block 9 schematizing an arc cosine function of the reference voltage $v_c$ (the inverse of the transfer function of the opposite control parameter) before it is applied by 11 to the gate pulse generator, e.g. the comparator.

The functions of blocks 8 and 9 are so chosen that they exactly compensate for the non-linearity of block 2. As a result, in both instances, the function of block 7 for the total transfer gain of the power amplifier system is linear (Figs. 2B and 3B).

Indeed, Figs. 2A, 2B and 3A, 3B are illustrative of preferred embodiments of the invention. More generally, the invention proposes as well to select as the transfer gain for blocks 8 and 9 any other function which will satisfy an intended transfer gain for block 7.

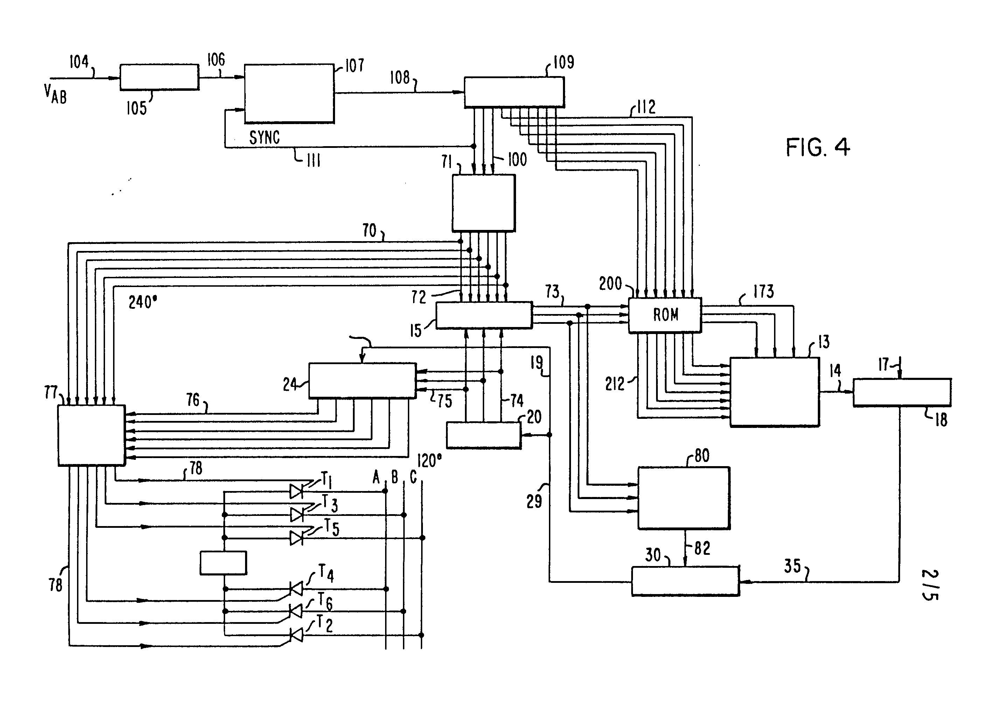

Fig. 4 shows the preferred embodiment of the invention.

Six power thyristors $T_1$-$T_6$ are mounted in a bridge with a load across a balanced three-phase system supplying voltages $V_A$, $V_B$, $V_C$ on three busses $L_1$, $L_2$, $L_3$ for phases A, B and C. The thyristors are gated for conduction from separate lines 78. The firing circuit conventionally includes a zero-crossing detector 105 supplied on line 104 with a reference sine wave $V_{AB}$ from the three-phase power system. Each time the reference waveform passes by zero in one direction, the output of zero-crossing detector 105 exhibits a logic transition. A phase-locked oscillator in the form of a voltage controlled oscillator 107 generates a clock signal on line 108 having a frequency determined by the relation between two input signals fed on respective lines 106 and 111. The clock signal on line 108 is fed into a digital counter 109 thereby to generate in digital form on lines 110, a digital representation of the number of clock pulses received since the last detected passing by zero of the reference waveform $V_{AB}$. N pulses are thus generated which instantaneously represent the electrical angle of waveform $V_{AB}$ whenever the most significant digit, on line 111, is in phase with the reference signal on line 104.

Since the object is to fire each of thyristors $T_1$-$T_6$ in sequence, counter 109 and D/A converter 13 are so controlled that on line 14 several ramps shifted relative to each other are generated in succession. Each corresponds to a phase of the power supply for a given polarity. The phase shift is achieved by a multiplexer 15 having input lines 74 derived from counter 20 and logically set so as to modify the most significant digits on line 110 from counter 109 thereby to derive on output lines 73 an altered digital combination of the most significant digits. These digits, thus on lines 73, together with the digits of lesser significance directly received from lines 112 are applied, in accordance with the present invention to a Read-Only-Memory (ROM) device 200, so as to convert the digits addressed as inputs thereto on lines 73 and 112 into respective output addresses 173 and 212. A digital-to-analog converter 13 responsive to the digital representation from counter 109 generates a signal on line 14 which is an analog representation of the time wave reference outputted on lines 113 and 212. A comparator 18 responsive to the signal of line 14 and to a reference voltage $V_c$ on line 17 generates at its output on line 35 a critical signal which represents in time the firing angle $\theta$ defined by the reference voltage $V_c$. Such critical signal on line 35 triggers a multivibrator 30 which in turn sets via line 29 a counter 20 into one of successive pre-established digital states. The latter over lines 74, 75 controls the logic of a distributor demultiplexer circuit 24, to select one of a plurality of thyristor channels among lines 76 and to which the control signal on lines 29 and 19 is gated.

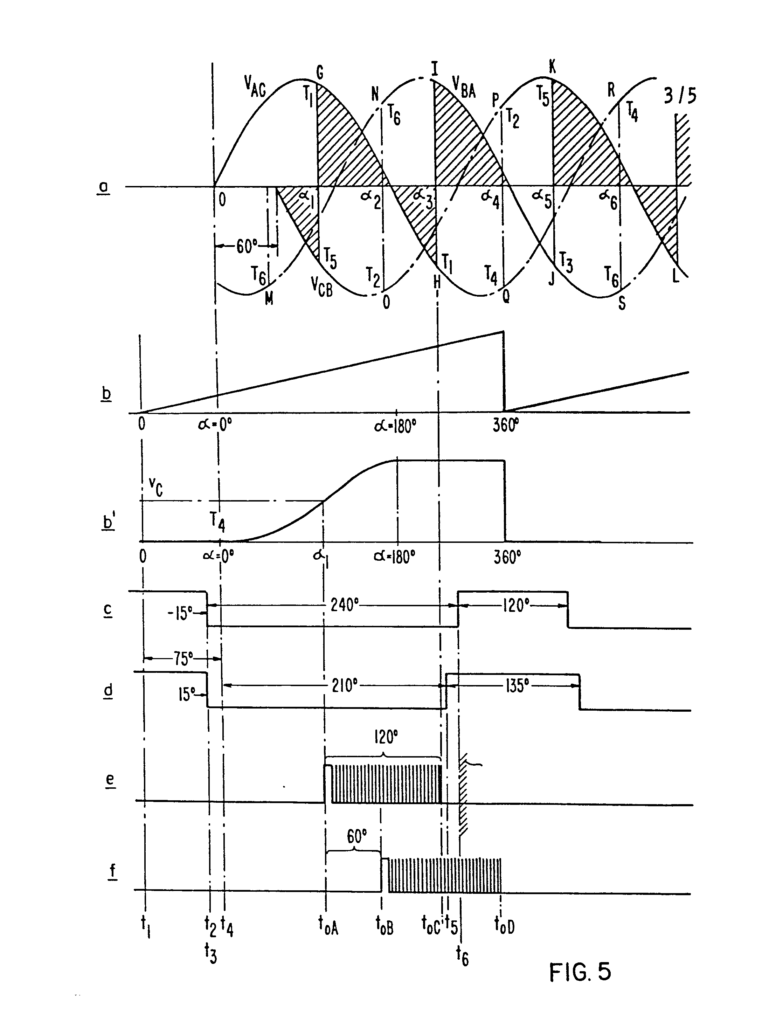

Referring to Fig. 5, curves (a) are the line voltage waveforms $V_{AC}$, $V_{CB}$ and $V_{BA}$ as applied to the thyristors $T_1$-$T_6$. They are shown with the periods of conduction indicated at firing angles $\alpha_1$-$\alpha_6$ for the respective thyristors. These curves are at a 60° phase shift to one another. Curve (b) shows one of the ramps which, due to counter 109, in the absence of ROM device 200 would be generated by digital to analog converter 13 on line 14, e.g., thus, with a linear transfer function like in block 1 of Fig. 2A.

The inputted accumulated counts along the ramp from 0 to 360° are addressed on lines 73 into ROM device 200 together with the lesser significant bits of lines 112. The outputted digital counts appear as 173 and 212 after transformation by a specific combination of inputs and outputs within device 200. Typically a cosine function is stored in accordance with the following general formulae:

$$X_{IN} = A_n 2^n + A_{n-1} 2^{n-1} + \ldots + A_1 2 + A_0$$

$$X_{OUT} = D_m 2^m + D_{m-1} 2^{m-1} + \ldots + D_1 2 + D_0,$$

where $A_n$ is the most significant bit. With such internal connections between the $X_{IN}$ input addresses and the $X_{OUT}$ output addresses, ROM device performs the function $X_{OUT} = \cos(X_{IN})$.

This embodiment is in accordance with Figures 2A and 2B. At the input of comparator 13, the combination of inputs 173 and 212 causes a cosine time wave to be inputted, rather than a linear one (curve $\underline{b}$ of Fig. 5). Curve $\underline{b'}$ represents the signal on line 24, e.g., the time wave effectively compared with a voltage reference $V_C$ within comparator 18. If curve b' as shown is the one for thyristor $T_1$, thyristor $T_1$ is fired at firing angle $\alpha_1$ for a voltage reference $V_C$ on line 17 at the input of comparator 18. In the commutation portion of the conduction cycle of thryistor $T_5$ a time $t_{OA}$ when thyristor $T_1$ fires, the voltage $V_{AC}$ applied between phases A and C causes natural commutation to occur turning OFF thyristor $T_5$. The same commutation process occurs at each firing angle $\alpha_2$-$\alpha_6$, in this order and alternatively for each polarity on the thyristor bridge.

The generation of a critical signal on line 35 depends upon the intersection of the horizontal line $v_C$ with signal b' of line 14. Should the voltage $V_C$ be smaller than the lowest point on curve b' or larger than the highest point on curve b', comparator 18 will not generate a critical signal on line 35 to trigger multivibrator 30. Thus, no hard pulse will be generated. In order to insure the occurrence of a hard pulse at all times it is generally known to establish two end stops which define an operative range along the ramp. These end stops are generally obtained by imposing a minimum bias on the reference voltage $V_c$ and an upper limit thereto, so that as seen by comparator 18 no excursion of $V_c$ outside these two limits is possible. The lower limit is generally known as the "rectification end stop", the other is the "inversion end stop".

Curve b' extends a 360° electrical angle and is shifted to the left of the associated line voltage waveforms, typically by 75° (from time $t_1$ to time $t_4$ on Fig. 5). Typically, ROM device 200 is so designed that the cosine function extends only between $\alpha=0°$ and $\alpha=180°$, e.g. the operative range.

A hard pulse is generated for actually firing the thyristor and a picket fence pulse train is supplied to the thyristor behind the hard pulse. The hard pulse is a pulse having the minimum quality necessary for an efficient firing of the particular type of thyristor under control. Typically, such hard pulse is a 50 microsecond igniting pulse. Thus, the hard pulse is a pulse of higher level and power with a sufficiently long duration so as to insure the most efficient gating condition for the particular type of thyristor to be ignited.

The logic of the distributor is such that one of channels 76 becomes available to receive the hard pulse from line 19 at the moment counter 20 transfers to a subsequent state. This logic is defined by lines 74, 75 from counter 20. The selected channel remains available during the conduction angle which, in this particular instance, has been chosen to be of 120°.

It is possible to use the reference timing waveform tied to line voltage $V_{AB}$ for all the thyristors. A division of such time reference into six different time intervals and a proper distribution of these time intervals between the respective phases, or channels, makes it possible to establish the cut-off points for the various thyristors. To this effect, a ramp decode logic circuit 71 is provided for generating from counter 109 a decoded representation of the three most significant digits thereof. Thus, six wires 70 are derived as logic wires to NAND logic circuit 77 which establish for each channel 76 alternate ON and OFF stages such as those shown by curve (c) of Fig. 5. Actually the front edge of curve (c) is not used since end-stop $ES_1$ (at time $t_2$ and $-15°$) would not allow the firing angle to decrease beyond $-15°$, or time $t_2$. In general $t_3$ must always be greater or equal to $t_2$, in this particular instance $t_3$ has been made equal to $t_2$. However, should the firing angle be shifted back toward end-stop $ES_2$, a moment will arrive when the picket fence pulses, which are separately fed, will become cut-off more and more (as can be seen from a comparison of curves (e) and (f) of Fig. 2). Time $t_6$, at $225°$ is the cut-off point in this particular instance.

End-stops $ES_1$ and $ES_2$ of Fig. 2, are generally established by generating limit analog voltages such that $V_c$ actually never appears outside these two limits. In the case of Fig. 4, this analog mode is not used to establish end-stops $ES_1$ and $ES_2$. If $v_c$ is allowed, as seen from the comparator 18, to decrease to such extent that, at the beginning or the top of curve b', e.g., of the ramp of curve b (Fig. 5), a comparison can no longer be made by comparator 18, no critical signal would be generated on line 35 and no hard pulse could be applied on line 29 to advance counter 20. In order to prevent this and insure the ignition of the thyristor next in sequence, a hard pulse is caused to appear by controlling multivibrator 30 separately. As shown in Fig. 4, a digital information is derived from lines 73 at the output of multiplexer 15 and applied via lines 79 to ramp code limit detector circuit 80. The latter circuit is in the form of a digital decoder which detects the desired end-stops $ES_1$, $ES_2$ in the form of a transition to a digital state. Normally the decoder 80 detects these two limits and assumes opposite states at the output 82 for counts within and outside these limits. The signal on line 82 is applied as a triggering signal to multivibrator 30. A hard pulse is thus generated on line 29 and normal operation will result as if a firing angle had been established at this time.

The invention is also applicable where a digital reference voltage is applied for the selection of a firing angle rather than an analog reference voltage at 17 in Figure 4.

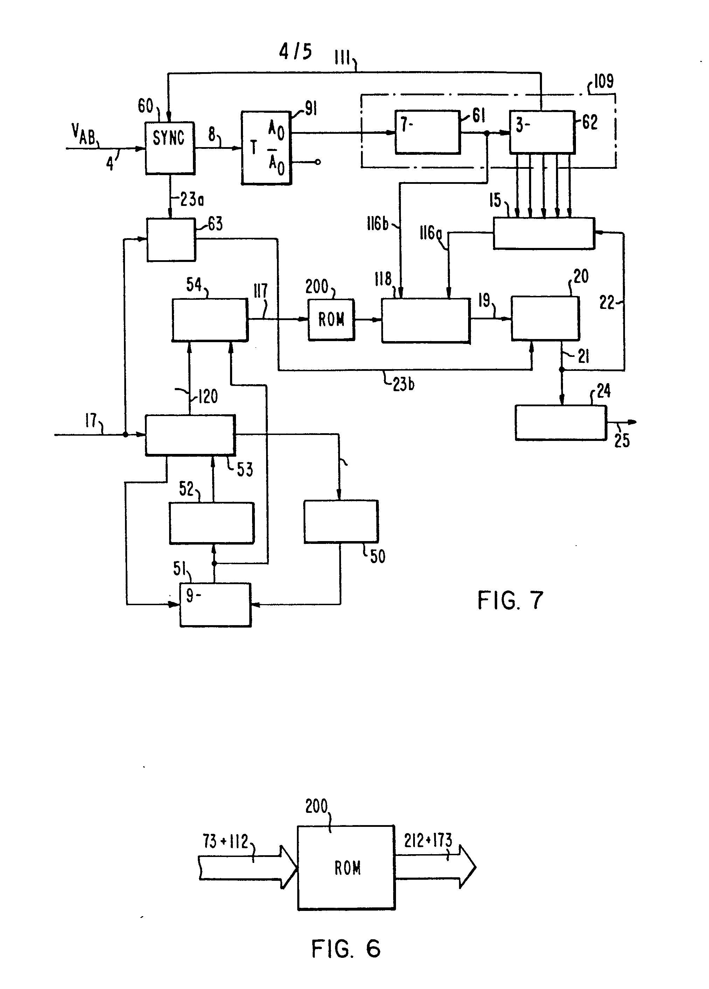

If an analog reference signal is supplied an A/D converter is employed to convert the analog reference signal into a digital reference signal. A block diagram of the digital phase controller is shown in Fig. 7 which is described in detail in U.S. Patent 4,017,744 of F. O. Johnson. The synchronized clock 60 is equivalent to the combination of the zero-crossing detector 105 and the variable frequency oscillator 107 of Fig. 4. A 7-stage counter 61 and a 3-stage counter 62 together form a ten-stage counter 109 equivalent to the digital counter 109 of Fig. 4. As in Fig. 4, the most significant digit of the 3-stage counter 62 generates the Nth pulse on line 111 which serves to synchronize the clock pulses at the output on line 8. Also on Fig. 7 a set gate 63 is provided responsive to the synchronizing pulse on line 23a to generate a signal on line 23b for aligning the ring counter 20 which controls the distributor and gating circuit 24. The main difference here resides in that comparator 118 of Fig. 7 is a digital comparator whereas comparator 18 of Fig. 4 is analog. As in Fig. 4 the comparator triggers the ring counter 20. Ring counter 20 establishes via lines 21, 22 a concordance between its own digital state and the state of the multiplexer so as to insure that the proper phase selection is made at the time of reading the digital output of the 3-stage counter 62. The selected waveform is digital and appears on lines 116a from the 3-stage counter 62 and on lines 116b from the 7-stage counter 61. Lines 116a and 116b correspond to lines 73 and 112 of Fig. 4.

In the embodiment of Fig. 7 the digital reference is first obtained after conversion from an analog reference. The A/D converter is comprised of a high-speed clock 50, a 9-stage counter 51, level amplifiers 52, an analog comparator 53, and a shift register 54. The high-speed clock 50 drives the 9-stage counter 51 at a rate significantly higher than that of the synchronous clock 60. The level amplifiers 52 produce an analog equivalent of the state of the 9-stage counter 51. Whenever the output of the level amplifiers becomes less than the analog reference the analog comparator produces a hold pulse which stops the high-speed clock 50 and momentarily retains the 9-stage counter 51 in a fixed state equivalent to a comparison between said counter state and the analog reference. During the hold period the information represented by the state of the 9-stage counter is transferred to the shift register when a gate is released by the analog comparator. Thereafter, the gate is "closed" to retain the shift register in a fixed state as a reset signal is being produced to set the 9-stage counter in its "starting" state. After this is accomplished, the hold on the high-speed clock is released and the A/D converter proceeds to make another comparison. Following each comparison the information in the shift register is updated in order that the output of the shift register be representative of the analog reference existing at that instant and such representation is held until the next comparison is to be made.

The digital count on lines 116a and 116b, which corresponds to lines 73 and 112 of Fig. 4 is to be compared with the digital count 117 from shift register 54. However, in accordance with the present invention, such digital count is used as an input address to a read-only memory (ROM) device 200, like the one of Fig. 4. Since the output 217 thereof is to be fed on the other side of comparator 118, in contrast to the situation of Fig. 2A, 2B, the function introduced by ROM device 200 is the inverse of the one used in the first embodiment, e.g. an arc cosine function (Fig. 3A) rather than the cosine function of Fig. 2A, block 8. This second situation is illustrated by block 9 of Fig. 3A.

Functionally, the digital phase controller of this second embodiment operates in the same manner as the hybrid analog digital phase controller of the first embodiment. The synchronous clock 60, the 7-stage counter 61, and the 3-stage counter 62, respectively perform the same functions as the synchronized counter 26 in the hybrid analog digital phase controller of Fig. 4. The 3-stage counter 62 and distributor 24 also operate in the same manner as did their counterparts. There is no similarity however, in how the timing waveforms are produced, compared with synchronous counter 26 since here the timing waveforms are digital and are compared to the digital reference directly by the digital comparator 118. As each comparison is made by the digital comparator 118 a trigger pulse is produced which advances the 3-stage counter 62 and causes multiplexer 15 to set up the next "digital" timing waveform and appropriately changes the output of distributor 24.

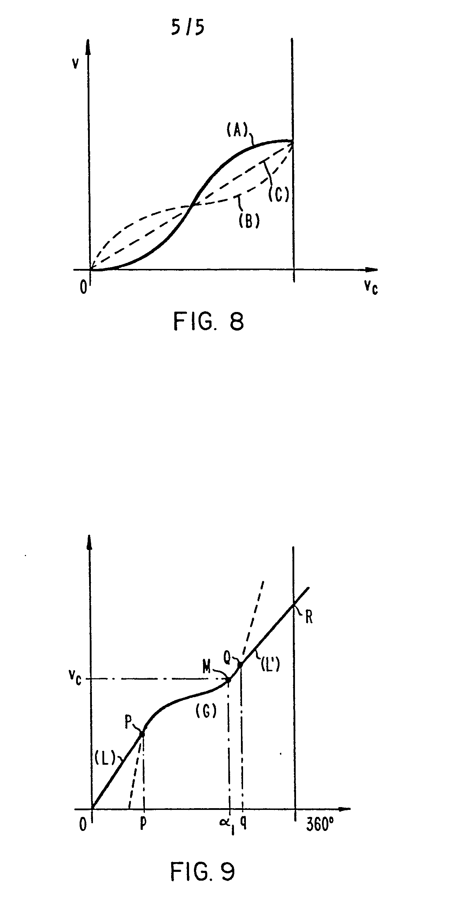

Referring to Fig. 8, three curves are illustrated which explain the operation of the ROM device 200 in the context of Figures 2A and 2B, for example. Curve (A) is the cosine function introduced by the time wave reference on line 10 obtained through block 8 after transformation. Curve (B) illustrates the function obtained on line 6 by block 2 due to the operation of the power converter when outputting a voltage v for each different value of the firing angle θ derived from line 5. If the characteristic stored in ·ROM device 200 (Fig. 6) is such that curve (A) exactly match in the opposite direction the non-linearity of curve (B), the resulting function will be substantially a line as shown by (C) on Fig. 10, like in Fig. 2B in block 7.

Referring now to Fig. 9, another embodiment of the invention is shown which makes use of the easiness in defining a function at will within ROM device 200 and the versatility of the technique proposed in accordance with the invention. Thus, it is possible to so program or establish the internal connections of the read-only-memory (ROM) that within a range (pq) of operation of the firing control systems a portion PQ of an arc cosine characteristic is used for the transfer gun in response to the inputted voltage reference $v_c$, thus according to the situation of Figs. 3A and 3B. Accordingly, between operative limits P and Q on the arc cosine curve, the digital firing pulse generator will provide the desirable effects derived from the cosine wave crossing method. However, outside limits P and Q, the ROM device is so designed that a linear characteristic is achieved, thereby eliminating all the afore-mentioned advantages of the cosine crossing method. This means that for input addresses $X_{IN}$ lower than $v_P$ (in digital form) and higher than $v_Q$ (also in digital form) a linear relation is established with the output addresses $X_{OUT}$ of the ROM device, rather than the cosine relation hereabove mentioned illustratively by reference to Fig. 6.

A further embodiment of the invention, also illustrative of the simplicity and versatility of the ROM device 200 when it is applied to a digital firing pulse generator, consists in choosing the characteristic of the ROM device so as to compensate for any degradation of transfer gain due to discontinuous current operation with the power converter. This problem has been discussed by B. R. Pelly in the afore-mentioned book entitled "Thyristor Phase-Controlled Converters and Cycloconverters", pages 118-121. In some applications the discontinuous mode referred to by Pelly may represent a significant portion of the total operation of the converter. In this respect, the effect on motor drives of such changes in power converter transfer gain has been discussed by M. Nieniewski and J. G. Boelinger in IEE-IAS 1978 Annual Meeting, a paper entitled "Computer Analysis of the Static Stiffness of SCR DC Feed Drives Used on NC Machine Tools". In order to cope with transfer gain changes, these authors propose that the transfer gain of the gate pulse generator be made to follow the formula $(K_1 + K_2 a)^2$ where $K_1$ and $K_2$ are two fixed constants and $a$ is the firing angle. In accordance with the present invention the ROM device 200 will achieve readily this desirable characteristic when $X_{OUT} = (K_1 + K_2 X_{IN})$ for all the addresses correlated in the ROM device of Fig. 4, in the situation where, as with Figures 3A, 3B, the voltage reference $v_c$ in digital form is being modified, or when

$$X_{OUT} = \frac{1}{(K_1 + K_2 X_{IN})^2}$$

where, as with Figures 2A, 2B, it is the time reference in digital form which is being modified by ROM device 200.

0028890

16

What we claim is:

1. A power converter having a plurality of thyristors selectively connected for controlled conduction at a firing angle determined by a reference signal, the power converter comprising: means for generating a time-wave-signal; means responsive to one of said reference-signal and time-wave-signals for introducing a predetermined transfer function in relation thereto; and comparator means responsive to said predetermined transfer function introducing means and to the other of said reference and time wave signals for establishing said firing angle relative to a selected thyristor.

2. The power converter of claim 1 with said generating means including a phase-locked loop circuit synchronized with the line-voltage and digital counting means associated thereto for generating a digital ramp signal as said time wave signal; with read-only-memory means responsive to said digital ramp signal for outputting a cosine digital signal; with said comparator means having a linear transfer gain and being responsive to said cosine digital signal and to said reference signal for outputting a firing pulse; whereby the output voltage of said power converter is linearly related to said reference signal.

3. The power converter of claim 1 with said generating means including a phase-locked loop circuit synchronized with the line voltage and digital counting means associated thereto for generating a digital ramp signal as said time wave signal; with read-only memory means responsive to said reference signal for outputting an arc cosine signal; with said comparator means having a linear transfer gain and being responsive to said arc cosine signal and to said digital ramp signal for outputting a firing pulse; whereby the output voltage of said power converter is linearly related to said reference signal.

4. The power converter of claim 2 or 3 with said read-only memory means outputting a linear digital signal outside a selected range of operation for said comparator means to output a firing pulse.

5. The power converter of claim 1 with said generating means including a phase-locked loop circuit synchronized with the line-voltage and digital counting means associated thereto for generating a digital ramp signal $X_{IN}$ as said time wave signal; with read-only-memory means responsive to said digital ramp signal for outputting a digital signal $X_{OUT}$ which is related to $X_{IN}$ by the formula

$$X_{OUT} = \frac{1}{(K_1 + K_2 X_{IN})^2}$$

with $K_1$ and $K_2$ being two predetermined constant factors; with said comparator means having a linear transfer gain and being responsive to said $X_{OUT}$ digital signal and to said reference signal for outputting a firing pulse.

6. The power converter of claim 1 with said generating means including a phase-locked loop circuit synchronized with the line voltage and digital counting means associated thereto for generating a digital ramp signal as said time wave signal; with said reference signal being digital as $X_{IN}$; with read-only memory means responsive to said $X_{IN}$ reference signal for outputting a digital signal $X_{OUT}$ which is related to $X_{IN}$ by the formula

$X_{OUT}=(K_1+K_2X_{IN})^2$, with $K_1$ and $K_2$ being two predetermined constant factors;

with said comparator means having a linear transfer gain and being responsive to said $X_{OUT}$ signal and to said digital ramp signal for outputting a firing pulse.

FIG. IA

FIG. IB

FIG. 2A

FIG. 2B

FIG. 3A

FIG. 3B

FIG. 4

FIG. 5

FIG. 7

FIG. 6

5/5

FIG. 8

FIG. 9

| European Patent Office | EUROPEAN SEARCH REPORT | Application number |
|---|---|---|
| | | EP 80 30 3744.9 |

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | DE - A - 2 323 826 (BROWN, BOVERI & CIE) <br> * page 6, paragraph 3 to page 10, paragraph 3 * <br> -- | 1 | H 02 M 1/08 <br> H 02 P 13/16 |
| A | US - A - 3 657 635 (R.D. QUINN) <br> * claim 4; Fig. 1 * <br> -- | | |
| A | ETZ-A, Vol. 96, No. 7, 1975 <br> M. BLUMENTHAL et al. "Digitales Zünd-winkelsteuergerät für netzgeführte Stromrichter an einem Netz variabler Frequenz" <br> pages 317 and 318 <br> * complete document * <br> -- | | **TECHNICAL FIELDS SEARCHED (Int. Cl.³)** <br><br> H 02 M 1/00 <br> H 02 P 13/00 |
| D | US - A - 4 028 609 (R.L. DETERING) <br> * column 2, line 55 to column 3, line 40 * <br> ---- | 1 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search <br> Berlin | Date of completion of the search <br> 11-02-1981 | Examiner <br> GESSNER | |

EPO Form 1503.1 06.78